# EUROPEAN PATENT APPLICATION

(11) **EP 2 897 110 A1**
(43) Date of publication of application: **22.07.2015**
(21) Application number: 15151058.3
(22) Date of filing: 14.01.2015
(51) Int. Cl.: G07G 1/00, G06Q 20/20, G06K 9/42

(54) **Commodity reading apparatus, sales data processing apparatus having the same and method for recognizing commodity**

(30) Priority: 21.01.2014 JP 2014008946
(71) Applicant: Toshiba TEC Kabushiki Kaisha, Tokyo 141-0032 (JP)
(72) Inventor: Urushibata, Yoshimi, Fuji, Shizuoka (JP)
(74) Representative: Takeuchi, Maya

(57) **Abstract**

In accordance with one embodiment, a commodity reading apparatus comprises an image capturing section, an extraction module, a measurement module, a determination module and an identification module. The image capturing section photographs a commodity to capture an image of the commodity. The extraction module extracts an appearance feature amount of the commodity from the image of the commodity captured by the image capturing section. The measurement module measures a distance from the image capturing section to the commodity photographed. The determination module determines the size of the commodity based on the distance measured by the measurement module and the size of the commodity in the image. The identification module recognizes the commodity based on the appearance feature amount extracted by the extraction module and the size determined by the determination module.

## Description

### FIELD

Embodiments described herein relate generally to a commodity reading apparatus, a sales data processing apparatus equipped with the commodity reading apparatus and a method for recognizing a commodity.

### BACKGROUND

A technology in which an object is recognized from an image thereof captured by an image capturing section is known. In the technology, an appearance feature amount of the object is extracted from the image and compared with a reference feature amount for each object registered in a recognition dictionary to calculate a similarity degree therebetween. Then, the object corresponding to the reference feature amount of which the similarity degree is the highest is recognized as the object photographed by the image capturing section. In recent years, it has been proposed to apply such an object recognition technology to a checkout system (POS system) of a retail store to recognize commodities purchased by a customer.

In a commodity reading apparatus which recognizes commodities purchased by a customer with the object recognition technology, the commodity held by a shop clerk or the customer over against a reading window is photographed by an image capturing section through a reading window. The position where the commodity is held over against the reading window is undefined, and thus the distance from the image capturing section to the commodity varies as well.

If the distance from the image capturing section to the commodity varies, the size of the commodity in the image captured by the image capturing section varies. The size of the commodity in the image captured by the image capturing section is an apparent or a superficial size, and therefore, cannot be used as an appearance feature amount in a proper recognition processing.

Thus, it is difficult to distinguish a commodity from those having similar appearances but different sizes to identify the commodity with high precision.

Accordingly, it is preferred to take the size of the commodity into consideration to carry out a commodity identification or recognition with higher precision.

### BRIEF DESCRIPTION OF THE DRAWINGS

Fig. 1 is an external view of a store checkout system according to one embodiment;
Fig. 2 is a block diagram illustrating electrical components in the store checkout system shown in Fig. 1;
Fig. 3 is a block diagram illustrating a distance sensor shown in Fig. 2;
Fig. 4 is a diagram schematically illustrating the structure of a distance-area table;
Fig. 5 is a flowchart illustrating commodity reading processing carried out in a first embodiment; and
Fig. 6 is a flowchart illustrating commodity reading processing carried out in a second embodiment.

### DETAILED DESCRIPTION

In accordance with one embodiment, a commodity reading apparatus comprises an image capturing section, an extraction module, a measurement module, a determination module and an identification module. The image capturing section photographs a commodity to capture an image of the commodity. The extraction module extracts an appearance feature amount of the commodity from the image of the commodity captured by the image capturing section. The measurement module measures a distance from the image capturing section to the commodity photographed. The determination module determines the size of the commodity based on the distance measured by the measurement module and the size of the commodity in the image. The identification module recognizes the commodity based on the appearance feature amount extracted by the extraction module and the size determined by the determination module.

Hereinafter, one embodiment is described with reference to the accompanying drawings. In the present embodiment, a store checkout system arranged on a checkout counter in a store such as a supermarket and the like is described as one example of a sales data processing apparatus having the function of the commodity reading apparatus.

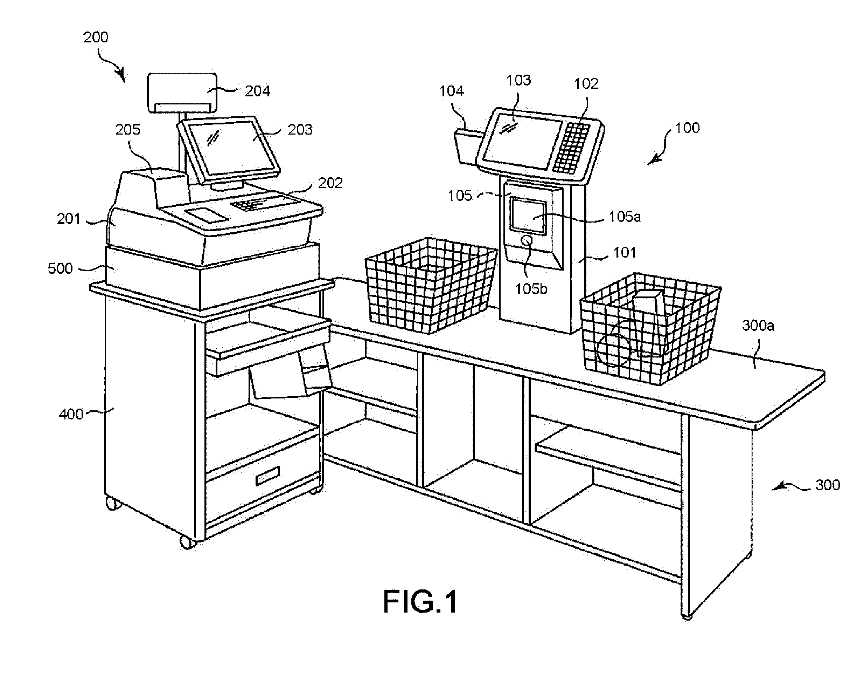

Fig. 1 is an external view of a store checkout system according to the present embodiment.

The store checkout system includes a commodity reading apparatus 100 and a POS (point of sales) terminal 200. The commodity reading apparatus 100 is arranged on a checkout counter 300. The POS terminal 200 is arranged on a drawer 500 placed on a register table 400. The commodity reading apparatus 100 and the POS terminal 200 are electrically connected with each other through a communication cable (not shown). There is a case in which an automatic change dispensing machine is arranged instead of the drawer 500.

The commodity reading apparatus 100 includes a housing 101, a keyboard 102, a touch panel 103, a display for customer 104 and an image capturing section 105.

The housing 101 formed in a vertical flat box shape stands on the checkout counter 300. The housing 101 supports, at the upper end thereof, the keyboard 102, the touch panel 103 and the display for customer 104, and also supports the image capturing section 105 at the front side.

The image capturing section 105 provided with a reading window 105a at the front side thereof and an image capturing device arranged inside thereof photographs a commodity (object) held over against the reading window 105a by an operator with the image capturing device through the reading window 105a. Further, the image capturing section 105 provided with a range-finding window 105b and a distance sensor arranged inside thereof measures the distance to the commodity. The reading window 105a and the image capturing device are tiltably supported to change or adjust the image capturing direction.

The POS terminal 200 comprises a housing 201, a keyboard 202, a display for operator 203, a display for customer 204 and a printer 205.

The housing 201 supports the keyboard 202 in such a state that a portion of the keyboard 202 is exposed to the outside thereof, supports both the display for operator 203 and the display for customer 204 outside thereof, and also supports the printer 205 inside thereof.

The checkout counter 300 includes an elongated top plate 300a. The checkout counter 300 divides a space into a customer passage (rear side in Fig. 1) along the longitudinal direction of the top plate and an operator space (near side in Fig. 1). The housing 101 of the commodity reading apparatus 100 is positioned in the approximate center of the top plate 300a in the longitudinal direction in such a state that the display for customer 104 is directed to the customer passage while the keyboard 102, the touch panel 103 and the reading window 105a are directed to the operator space, respectively. The upper surface of the top plate 300a is divided into an area at the upstream side and an area at the downstream side of the commodity reading apparatus 100 in the customer movement direction. The upstream area serves as a space for placing an unregistered commodity in the commodities that a customer purchases. The downstream area serves as a space for placing a registered commodity. A basket is placed at the downstream area to house a registered commodity. On the other hand, an unregistered commodity is usually housed in a basket carried by a customer and the basket is placed on the upstream area at the time checkout processing is carried out.

The register table 400 is positioned at the operator space such that it is arranged side by side with an end part of the checkout counter 300 at the downstream side of the movement direction of a customer in the customer passage.

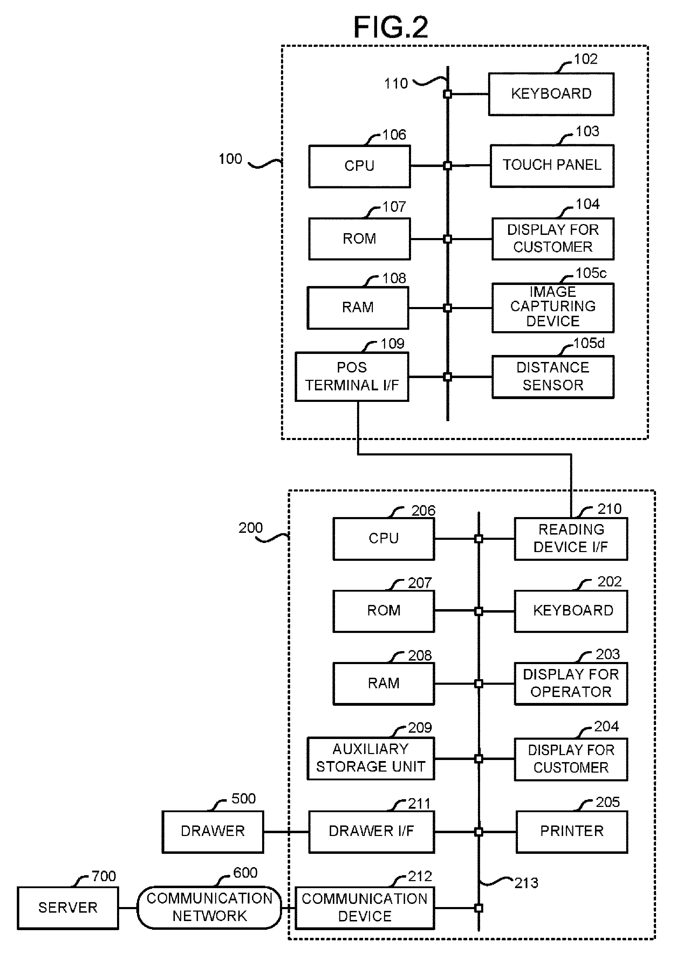

Fig. 2 is a block diagram of electrical components in the store checkout system shown in Fig. 1. Components shown in Fig. 2 similar to those shown in Fig. 1 are applied with the same numerals.

The commodity reading apparatus 100 further comprises, in addition to the keyboard 102, the touch panel 103 and the display for customer 104, an image capturing device 105c, a distance sensor 105d, a CPU (central processing unit) 106, a ROM (read-only memory) 107, a RAM (random-access memory) 108, a POS terminal interface (POS terminal I/F) 109 and a communication system 110 as the electrical components. The communication system 110, which includes a bus line including an address bus and a data bus and the like, a serial bus or a parallel bus, an interface circuit for mediating the transfer of data between the bus line and the serial bus or the parallel bus, connects the keyboard 102, the touch panel 103, the display for customer 104, the image capturing device 105c, the distance sensor 105d, the CPU 106, the ROM 107, the RAM 108 and the POS terminal interface 109 with each other.

The keyboard 102, which includes a plurality of key switches, outputs a command representing the content of an operation on these key switches by an operator.

The touch panel 103 includes a display device such as an LCD (liquid crystal display) and the like, and a transparent two-dimensional touch sensor overlapped on a display screen of the display device. The touch panel 103 displays an image on the display device under the control of the CPU 106. The touch panel 103 detects a touch position of an operator on the display screen of the display device with the two-dimensional touch sensor, and outputs coordinate data representing the touch position. The touch panel 103 displays an image representing various kinds of information shown to the operator, and inputs an operation of the operator.

The display for customer 104 displays a character string or an image under the control of the CPU 106. The display for customer 104 is used for displaying various character strings or images presented to a customer. The display for customer 104 may be, for example, a fluorescent tube display or an LCD.

The image capturing device 105c is included in the image capturing section 105 together with an image capturing lens (not shown). The image capturing device 105c includes a CCD (charge coupled device) image capturing element serving as an area image sensor and a drive circuit thereof. The image capturing lens focuses an image of an image capturing area on the CCD image capturing element. The image capturing area refers to an area of an image focused on the area of the CCD image capturing element through the image capturing lens from the reading window 105a. The image capturing device 105c acquires frame data representing the image (frame image) of the image capturing area at constant time intervals, and outputs the frame data. If a commodity is positioned at the image capturing area, the image of the image capturing area reasonably includes an image of the commodity.

The distance sensor 105d belongs to the image capturing section 105. The distance sensor 105d measures, through the range-finding window 105b, the distance to the commodity held in front of the reading window 105a by the operator. Various well-known types of sensors can be used as the distance sensor 105d and thus a laser rangefinder is preferable, as an example of such sensor. The distance sensor 105d is one of the examples of the measurement module.

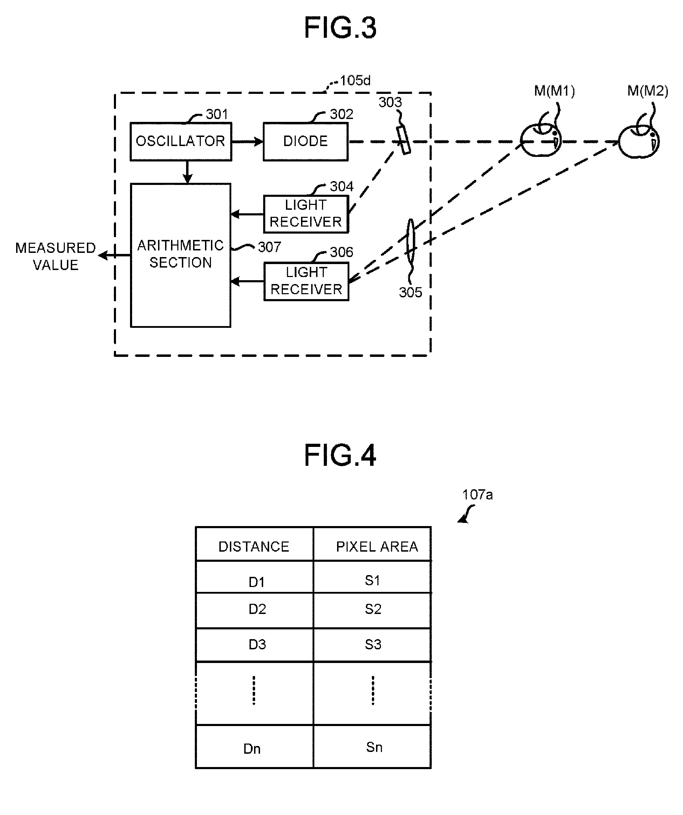

Fig. 3 is a block diagram illustrating the distance sensor 105d.

The distance sensor 105d includes an oscillator 301, a laser diode 302, a half-mirror 303, a light receiver 304, a light receiving lens 305, a light receiver 306 and an arithmetic section 307.

The oscillator 301 oscillates a clock signal with a given frequency, and supplies the signal to the diode 302 and the arithmetic section 307.

The laser diode 302 intermittently emits laser light in synchronization with the clock signal. In this way, the diode 302 outputs a laser signal by flashing the laser light.

The half-mirror 303 transmits part of the laser signal therethrough and reflects the other part of the laser signal to the light receiver 304.

The light receiver 304 receives the laser signal reflected by the half-mirror 303 and outputs an electric signal (hereinafter referred to as a reference signal) with amplitude corresponding to the light intensity of the laser signal to the arithmetic section 307.

The light receiving lens 305 transmits the laser signal reflected by a commodity M to the light receiver 306.

The light receiver 306 receives the laser signal transmitted through the light receiving lens 305 and outputs an electric signal (hereinafter referred to as a measurement signal) with amplitude corresponding to the light intensity of the laser signal to the arithmetic section 307.

The arithmetic section 307 compares the clock signal with the reference signal to calculate a delay time, as a reference time, for which the laser signal sent from the diode 302 is received by the light receiver 304. The arithmetic section 307 compares the clock signal with the measurement signal to calculate a delay time, as a measurement time, for which the laser light sent from the diode 302 is reflected by the commodity M and then received by the light receiver 306. Sequentially, the arithmetic section 307 compares the reference time with the measurement time to calculate the distance from the diode 302 to the commodity M. The arithmetic section 307 may output the distance from the diode 302 to the commodity M as a measured value; alternatively, the arithmetic section 307 calculates the distance from a reference position, of which the position relation with the diode 302 is already known, to the commodity M based on the distance from the diode 302 to the commodity M and the foregoing position relation, and may output the calculated distance as the measured value.

Compared with a light path from the diode 302 to the light receiver 306 in a first state M1 in which the commodity M is positioned at the left side in Fig. 3, a light path from the diode 302 to the light receiver 306 in a second state M2 in which the commodity M is positioned at the right side in Fig. 3 is longer. Thus, the measurement time in the second state M2 is longer than that in the first state M1, and the measured value in the second state M2 is greater.

Now return to the description referring to Fig. 2.

The CPU 106 is a central part of a computer. The CPU 106 controls each component of the commodity reading apparatus 100 to realize various operations of the commodity reading apparatus 100 according to an operating system, middleware and an application program which are stored in the ROM 107.

The ROM 107 is a main storage part of the computer. The ROM 107 stores the operating system, the middleware and the application program mentioned above. As occasion demands, the ROM 107 also stores data referred to when the CPU 106 carries out various kinds of processing.

The application program stored in the ROM 107 includes a control program relating to a later-described commodity reading processing. The transfer of the commodity reading apparatus 100 is generally carried out in a state in which the control program is stored in the ROM 107. Alternatively, an auxiliary storage device such as an EEPROM (electric erasable programmable read-only memory), a hard disk drive, or an SSD (solid state drive) and the like may be arranged in the commodity reading apparatus 100, and the transfer of the commodity reading apparatus 100 can be carried out in a state in which the control program is stored in the auxiliary storage device. However, it is also applicable that the commodity reading apparatus 100 is transferred in a state in which the control program is not stored in the ROM 107 or the auxiliary storage device, on the one hand; and the control program is transferred by being recorded in a removable recording medium such as a magnetic disc, a magnetic optical disk, an optical disk, a semiconductor memory and the like or through a network, on the other hand; and then the control program stored in the removable recording medium or through the network is written in the auxiliary storage device of the commodity reading apparatus 100 separately transferred in the foregoing way.

The data stored in the ROM 107 includes a distance-area table 107a.

Fig. 4 is a diagram schematically illustrating the structure of the distance-area table 107a.

The distance-area table 107a includes a pixel area in association with each of a plurality of distances.

In the distance-area table 107a, a numeric in the range of the measured value obtained by the distance sensor 105d for the commodity positioned in the readable range is recorded as a distance. The readable range refers to a range in which an image can be captured by the image capturing device 105c properly so that the commodity in the captured image can be recognized through the object recognition.

The pixel area refers to a value of the area of a commodity represented per pixel of the image captured by the image capturing device 105c in a case in which the commodity is positioned at a distance associated with the pixel area. It is widely known that the longer the distance from the image capturing section to the object image-captured goes, the lower the resolution of the image captured by the image capturing section 105 becomes. Specifically, the longer the distance from the image capturing section to the object image-captured goes, the greater the area of the object represented per pixel becomes. Further, the area of the object represented per pixel is uniquely determined based on the characteristic of the image capturing section 105 and the distance to the object. Thus, the value of the area of the commodity represented per pixel at the time a distance (associated distance) is measured by the distance sensor 105d is calculated based on the characteristic of the image capturing section 105 and the position relation between the image capturing section 105 and the distance sensor 105d to record it as the image area.

Now return to the description referring to Fig. 2.

The RAM 108 is also a main storage part of the computer mentioned above. The RAM 108 stores data referred to when the CPU 106 carries out various kinds of processing. Further, the RAM 108 is also used as a so-called work area for storing the data temporarily used when the CPU 106 carries out various kinds of processing.

The POS terminal interface 109 mediates the transfer of data between the POS terminal 200 and the CPU 106. A well-known device based on, for example, a USB standard or an RS-232C standard may be used as the POS terminal interface 109.

The POS terminal 200 further comprises, in addition to the keyboard 202, the display for operator 203, the display for customer 204 and the printer 205, a CPU 206, a ROM 207, a RAM 208, an auxiliary storage unit 209, a reading device interface (reading device I/F) 210, a drawer interface (drawer I/F) 211, a communication device 212 and a communication system 213 as the electrical components. The communication system 213, which includes a bus line including an address bus and a data bus and the like, a serial bus or a parallel bus, an interface circuit for mediating the transfer of data between the bus line and the serial bus or the parallel bus, connects the CPU 206, the ROM 207, the RAM 208, the auxiliary storage unit 209, the reading device interface 210, the drawer interface 211 and the communication device 212 with each other.

The keyboard 202, which includes a plurality of key switches, outputs a command representing the content of an operation on these key switches by an operator.

The display for operator 203 displays an image under the control of the CPU 206. The display for operator 203 is further used for displaying various images indicated to an operator. For example, an LCD can be used as the display for operator 203.

The display for customer 204 displays a character string or an image under the control of the CPU 206. The display for customer 204 is used for displaying various character strings or images to a customer. The display for customer 204 may be, for example, a fluorescent tube display or an LCD.

The printer 205 prints a receipt image indicating the transaction content on receipt paper under the control of the CPU 206. The printer 205 may be an existing printer of well-known various types, for example, a thermal printer.

The CPU 206 is a central part of a computer. The CPU 206 controls each section to realize various operations of the POS terminal 200 according to an operating system, middleware and an application program which are stored in the ROM 207.

The ROM 207 is a main storage part of the computer. The ROM 207 stores the operating system, the middleware and the application program mentioned above. As occasion demands, the ROM 207 also stores data referred to at the time the CPU 206 carries out various kinds of processing.

The RAM 208 is also a main storage part of the computer mentioned above. The RAM 208 stores data referred to when the CPU 206 carries out various kinds of processing. Further, the RAM 208 is also used as a so-called work area for storing data temporarily used when the CPU 206 carries out various kinds of processing. Part of the storage area of the RAM 208 is used as a commodity list area for managing information of a commodity which is registered as a purchased commodity.

The auxiliary storage unit 209 is an auxiliary storage part of the computer mentioned above. The auxiliary storage unit 209, which is, for example, a hard disk drive or an SSD, stores data used when the CPU 206 carries out various kinds of processing and data generated through the processing carried out by the CPU 206. As occasion demands, the auxiliary storage unit 209 also stores the middleware and the application program mentioned above. The data stored in the auxiliary storage unit 209 includes a recognition dictionary file. A plurality of recognition dictionary data containing a commodity ID, a commodity name and feature amount data are stored in the recognition dictionary file. The commodity ID is a unique code for identifying each commodity individually. The commodity name indicates a commodity specified with the commodity ID contained in the same recognition dictionary data. The feature amount data is a set of numerical values (feature amount degree) representing the appearance feature (appearance shape, hue, pattern, concave-convex state and the like) of a commodity identified with the commodity ID contained in the same recognition dictionary data.

The reading device interface 210 mediates the transfer of data between the commodity reading apparatus 100 and the CPU 206. A well-known device based on the standard of the POS terminal interface 109 may be used as the reading device interface 210.

The drawer interface 211 outputs a drive signal for opening the drawer 500 to the drawer 500 in response to a drawer opening instruction from the CPU 206.

The communication device 212 communicates with a server 700 through a communication network 600. The communication device 212 may be, for example, an existing LAN communication device.

Next, as to the operations of the store checkout system with the constitution described above, the operation of the commodity reading apparatus 100 is mainly described. Though functions of an existing apparatus which is of the same type as the commodity reading apparatus 100 are included in the commodity reading apparatus 100 also, description of the operation relating to the functions thereof is omitted. Further, though the POS terminal 200 also includes functions of an existing device which is of the same type as the POS terminal 200, description of the operation relating to the functions thereof is also omitted.

### (A First Embodiment)

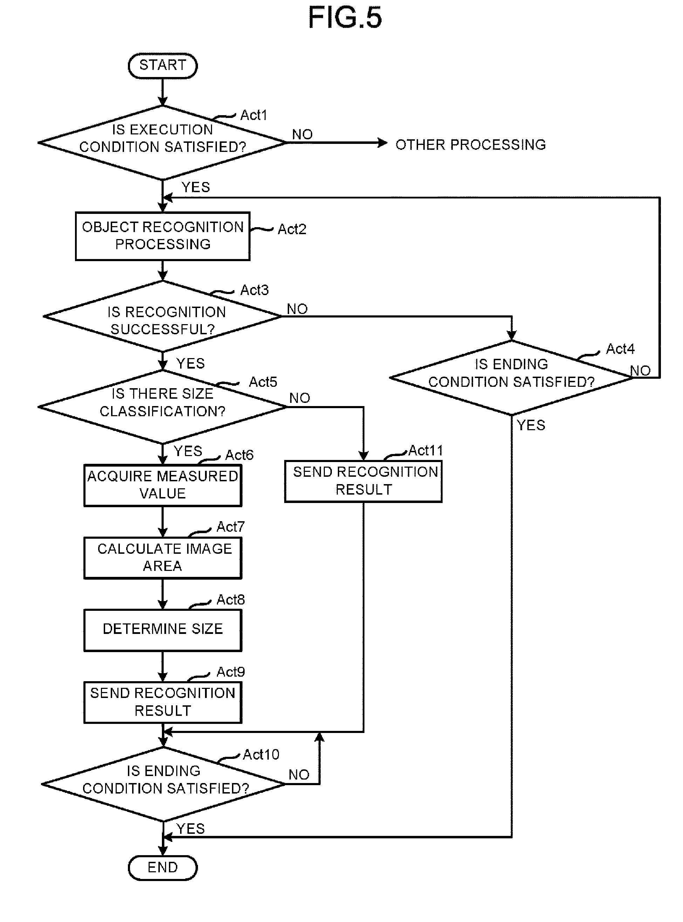

Fig. 5 is a flowchart illustrating a commodity reading processing according to the first embodiment.

At the time the commodity reading apparatus 100 is in a general operation state, the CPU 106 executes the commodity reading processing shown in Fig. 5 repeatedly. An execution interval of the commodity reading processing is freely determined by the designer of the commodity reading apparatus 100. The content of the processing described below is just one example, and various processing which can achieve the same effect as the commodity reading apparatus 100 may be adopted, instead.

In ACT 1, the CPU 106 confirms whether or not the execution condition of the object recognition processing is satisfied. The execution condition is, for example, that the commodity reading based on the object recognition is set to be valid and an image corresponding to the object can be extracted from the frame image captured by the image capturing device 105c. The execution condition may be freely determined by, for example, the user or the designer of the commodity reading apparatus 100. If it is determined that the execution condition is not satisfied (NO in ACT 1), the CPU 106 carries out other processing to read the commodity through, for example, barcode recognition. If the CPU 106 determines that the execution condition is satisfied (YES in ACT 1), ACT 2 is taken.

In ACT 2, the CPU 106 executes the object recognition processing. The CPU 106 extracts the appearance feature amount of the commodity from a newest frame image captured by the image capturing device 105c. At this time, the CPU 106 functions as an extraction module. Then the CPU 106 compares the extracted appearance feature amount with the reference feature amount for each commodity registered in the recognition dictionary stored in the auxiliary storage unit 209 to calculate a similarity degree. The CPU 106 recognizes the commodity corresponding to the reference feature amount of which the similarity degree is the highest as the commodity photographed by the image capturing section. For example, a well-known technology disclosed in Japanese Unexamined Patent Application Publication No. 2013-89090 may be used as the object recognition processing. However, the feature amount relating to the size of the commodity is not taken into consideration in the object recognition processing. Thus, there is a possibility that the commodities same in category but different in size are recognized as candidates for the commodities which are of the same category and need to be distinguished in size from one another. For example, in a case of "apple" of M size and "apple" of L size which are different in sales unit price, it is necessary to recognize whether the commodity is the "apple (M)" or the "apple (L)"; however, both the "apple (M) " and the "apple (L) " are recognized as candidates in the object recognition processing.

In ACT 3, the CPU 106 confirms whether or not the commodity recognition with the object recognition processing is successfully performed. If the CPU 106 determines that the recognition is not successfully performed (NO in ACT 3), ACT 4 is taken.

In ACT 4, the CPU 106 confirms whether or not an ending condition of the object recognition processing is satisfied. The ending condition includes, for example, a case in which an operation instructing to interrupt the commodity reading with the object recognition is carried out by an operator through the keyboard 102 or the touch panel 103, and a case in which the image corresponding to the object cannot be extracted from the newest frame image captured by the image capturing device 105c. The ending condition may be freely determined by, for example, the user or the designer of the commodity reading apparatus 100. If it is determined that the ending condition is satisfied (YES in ACT 4), the CPU 106 ends the commodity reading processing. On the contrary, if the CPU 106 determines that the ending condition is not satisfied (NO in ACT 4), ACT 2 is taken to execute an object recognition processing in which a frame image newly captured by the image capturing device 105c is taken as the processing target.

In this way, the frame image taken as the processing target is changed and the object recognition processing is carried out repeatedly until the recognition is successfully performed or the ending condition is satisfied. If the CPU 106 determines that the commodity recognition with the object recognition processing is successfully executed (YES in ACT 3), ACT 5 is taken.

In ACT 5, the CPU 106 confirms whether or not there is a size classification in the recognized commodity. Specifically, for example, the CPU 106 determines that there is a size classification in a case in which a plurality of commodities same in category but different in size are recognized as candidates. If the CPU 106 determines that there is a size classification (YES in ACT 5), ACT 6 is taken.

In ACT 6, the CPU 106 acquires the measured value output by the distance sensor 105d.

In ACT 7, the CPU 106 calculates the image area (hereinafter referred to as a commodity area) of the commodity recognized through the object recognition. Specifically, the CPU 106 first retrieves the distance-area table 107a with the measured value acquired in ACT 6 as a key to obtain the pixel area associated with the distance of a value the same as or approximate to the measured value. Next, the CPU 106 counts the number of pixels contained in the image of the commodity extracted from the frame image which is taken as a processing target in the object recognition processing in ACT 2, and multiplies the count value by the pixel area to calculate the commodity area.

In ACT 8, the CPU 106 determines the size of the commodity based on the calculated commodity area. For example, the size determination can be carried out by reference to a data table, for example, stored in the auxiliary storage unit 209 in advance, which represents the relationship between the commodity area and the size. In this way, the CPU 106 functions as a determination module.

In ACT 9, the CPU 106 specifies a commodity code according to the recognition result (recognition) in ACT 2 and the determination result (identification) in ACT 8 and sends the recognition result indicating the commodity code to the POS terminal 200. Through the processing in ACT 9 and the processing in ACT 2, the CPU 106 functions as an identification (recognition) module.

In ACT 10, the CPU 106 confirms whether or not the ending condition is satisfied. If the CPU 106 determines that the ending condition is not satisfied (NO in ACT 10), the processing in ACT 10 is carried out again. The CPU 106 waits for until the ending condition is satisfied in ACT 10. On the contrary, if the CPU 106 determines that the ending condition is satisfied (YES in ACT 10), the commodity reading processing is ended.

On the other hand, if the CPU 106 determines that there is no size classification in the commodity recognized in ACT 2 (NO in ACT 5), ACT 11 is taken.

In ACT 11, the CPU 106 specifies the commodity code according to only the recognition result in ACT 2, and sends the recognition result indicating the commodity code to the POS terminal 200. Sequentially, the CPU 106 turns into a state of waiting until the ending condition is satisfied in ACT 10.

If the recognition result sent from the commodity reading apparatus 100 with the processing of the CPU 106 in ACT 9 or ACT 11 is received in the POS terminal 200, the CPU 206 adds the commodity code indicated in the recognition result to the commodity list area in the RAM 208. Then, a well-known data processing, such as the processing for settlement and sales management, relating to the purchase of the commodity is carried out based on the data of the commodity list area. In this way, the CPU 206 functions as a processing module.

As stated above, according to the first embodiment, commodity recognition can be carried out, taking the size of the commodity into consideration. In this way, it is possible to recognize the commodities same in category but different in size as separate commodities, respectively. Then, the data processing relating to the purchase of commodity can be carried out as the commodities recognized as a separate commodity are distinguished from each other.

### (A Second Embodiment)

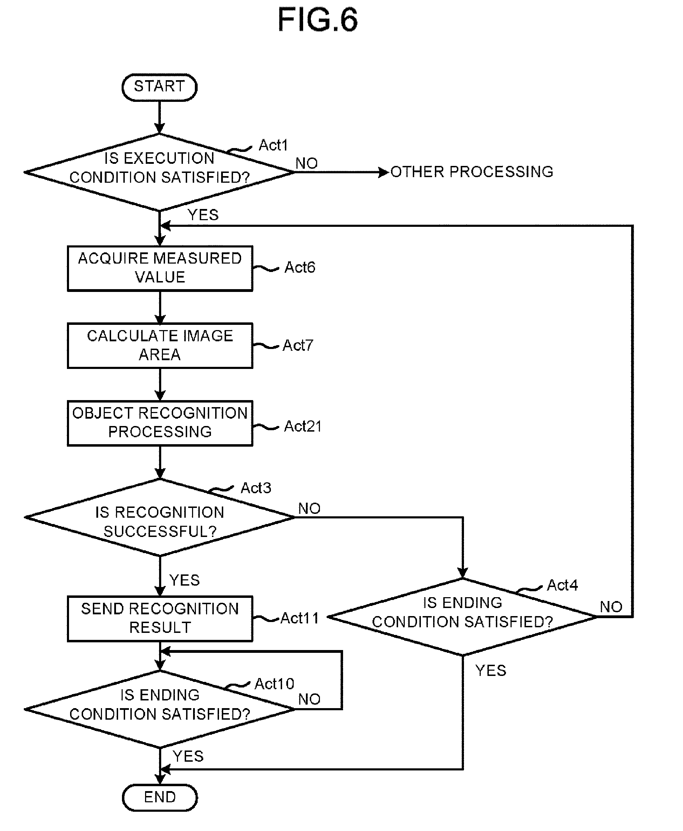

Fig. 6 is a flowchart illustrating a commodity reading processing according to the second embodiment. The same numerals in Fig. 5 are applied to the same processing shown in Fig. 6 as that shown in Fig. 5, and the detailed descriptions thereof are omitted.

If the CPU 106 determines that the execution condition is satisfied (YES in ACT 1), ACT 6 is taken.

The CPU 106 acquires the measured value in ACT 6, and calculates the commodity area in ACT 7, after that ACT 21 is taken.

In ACT 21, the CPU 106 executes the object recognition processing. The processing procedure in the object recognition processing mentioned herein may be the same as that in ACT 2 in the first embodiment. However, in ACT 21, the CPU 106 takes the commodity area calculated in ACT 7 into account as one of the feature amounts. Thus, the recognition dictionary data in the second embodiment contains the commodity area as one of the feature amounts. In this way, the CPU 106 functions as the extraction module for extracting at least the commodity size as the appearance feature amount and also functions as the identification module for identifying the commodity based on the appearance feature amount (including the size of the commodity) extracted by the extraction module.

After the object recognition processing is completed, the CPU 106 confirms whether or not the recognition is successfully performed in ACT 3. If it is determined that the recognition is not successful (NO in ACT 3), the CPU 106 confirms whether or not the ending condition is satisfied in ACT 4. If CPU 106 determines that the ending condition is not satisfied (NO in ACT 4), ACT 6 is taken again. In this way, the frame image taken as the processing target is changed and the processing in ACT 6, ACT 7 and ACT 21 is carried out repeatedly until the recognition is successfully performed or the ending condition is satisfied. If the CPU 106 determines that the commodity recognition based on the object recognition processing is successfully performed (YES in ACT 3), ACT 11 is taken.

In ACT 11, the CPU 106 sends a recognition result indicating a commodity code specified according to the recognition result in ACT 21 to the POS terminal 200. Sequentially, the CPU 106 turns into a state of waiting until the ending condition is satisfied in ACT 10.

If the CPU 106 determines that the ending condition is satisfied (YES in ACT 10 or ACT 4), the commodity reading processing is ended.

If the recognition result sent from the commodity reading apparatus 100 through the processing of the CPU 106 in ACT 11 is received by the POS terminal 200, the CPU 206 adds the commodity code indicated in the recognition result to the commodity list area in the RAM 208. Then well-known data processing, such as the processing for settlement and sales management, relating to the purchase of the commodity is carried out based on the data of the commodity list area.

As stated above, according to the second embodiment, the object recognition processing can be carried out, taking the size of the commodity into consideration as one of the feature amounts. In this way, it is possible to recognize the commodities same in category but different in size as separate commodities, respectively. Then, the data processing relating to the purchase of commodity can be carried out as the commodities recognized as a separate commodity are distinguished from each other.

The embodiment can be applied in various forms as follows.

It is applicable that the commodity reading apparatus 100 and the POS terminal 200 are integrated into one apparatus. It is exemplified that the CPU 106 of the commodity reading apparatus 100 serves as a central part of a computer and carries out various controls. However, the present invention is not limited to this. The CPU 206 of the POS terminal 200 may serve as a central part of a computer and carry out various controls.

While certain embodiments have been described, these embodiments have been presented by way of example only, and are not intended to limit the scope of the invention. Indeed, the novel embodiments described herein may be embodied in a variety of other forms; furthermore, various omissions, substitutions and changes in the form of the embodiments described herein may be made without departing from the spirit of the invention. The accompanying claims and their equivalents are intended to cover such forms or modifications as would fall within the scope and spirit of the invention.

## Claims

1. A commodity reading apparatus, comprising:
an image capturing section configured to photograph a commodity to capture an image of the commodity;
an extraction module configured to extract an appearance feature amount other than the size of the commodity from the image of the commodity captured by the image capturing section;
a measurement module configured to measure a distance from the image capturing section to the commodity;
a determination module configured to determine the size of the commodity based on the distance measured by the measurement module and the size of the commodity in the image; and
an identification module configured to recognize the commodity based on the appearance feature amount extracted by the extraction module and the size of the commodity determined by the determination module.

2. The commodity reading apparatus according to claim 1, wherein, if the identification module recognizes a plurality of commodity candidates when recognizing a commodity according to the appearance feature amount of the commodity, the identification module identifies one from the plurality of commodity candidates based on the size of the commodity as the photographed commodity to recognize the commodity.

3. A sales data processing apparatus, comprising:
an image capturing section configured to photograph a commodity to capture an image of the commodity;
an extraction module configured to extract an appearance feature amount of the commodity from the image of the commodity captured by the image capturing section;
a measurement module configured to measure a distance from the image capturing section to the commodity photographed by the image capturing section;
a determination module configured to determine the size of the commodity photographed by the image capturing section based on the distance measured by the measurement module and the size of the commodity in the image captured;
an identification module configured to recognize the commodity based on the appearance feature amount extracted by the extraction module and the size of the commodity determined by the determination module; and
a processing module configured to carry out a given data processing relating to the purchase of commodity on the commodity, as a purchased commodity, recognized by the identification module.

4. The sales data processing apparatus according to claim 3, wherein, if the identification module recognizes a plurality of commodity candidates when recognizing a commodity according to the appearance feature amount of the commodity, the identification module identifies one from the plurality of commodity candidates based on the size of the commodity as the photographed commodity to recognize the commodity.

5. A method for recognizing a commodity by a commodity reading apparatus having an image capturing section, including:
photographing a commodity by the image capturing section to capture an image of the commodity;
extracting an appearance feature amount of the commodity from the image of the commodity;
measuring a distance from the image capturing section to the commodity;
determining the size of the commodity based on the measured distance and the size of the commodity in the image captured by the image capturing section; and
recognizing the commodity based on the extracted appearance feature amount and the determined size.
